Europäisches Patentamt

(19) European Patent Office

Office européen des brevets

(11) Publication number: **0 221 859 B1**

# EUROPEAN PATENT SPECIFICATION

(12)

(45) Date of publication of patent specification:
**17.04.91 Bulletin 91/16**

(51) Int. Cl.⁵: **B60R 16/02**

(21) Application number: **86830271.2**

(22) Date of filing: **01.10.86**

(54) **Electrical power distribution system for a motor vehicle.**

(30) Priority: **01.10.85 IT 2232185**

(43) Date of publication of application:
**13.05.87 Bulletin 87/20**

(45) Publication of the grant of the patent:
**17.04.91 Bulletin 91/16**

(84) Designated Contracting States:
**DE ES FR GB**

(56) References cited:
**FR-A- 2 483 646**
**FR-A- 2 494 534**
**GB-A- 1 427 133**
**GB-A- 2 039 113**
**GB-A- 2 043 313**

(73) Proprietor: **CAVIS CAVETTI ISOLATI S.p.A.**
**Via Roma, 31**
**I-15023 Felizzano (Alessandria) (IT)**

(72) Inventor: **Codrino, Giuseppe**
**Via Stazione, 2**
**I-15028 - Quattordio Alessandria (IT)**

(74) Representative: **Cicogna, Franco**
**Ufficio Internazionale Brevetti Dott.Prof.**
**Franco Cicogna Via Visconti di Modrone, 14/A**
**I-20122 Milano (IT)**

## Description

The present invention relates to an electrical system for motor vehicles, comprising devices able to effect a balanced distribution of power to the various electrical utilisers of the motor vehicles.

As is known, on all vehicles there is normally provided an electrical system able to supply a plurality of services which are essential for correct utilisation of the vehicles.

It is likewise known, however, that the supply and control of these services are conventionally effected by means of a bundle of cables constituting a corresponding number of different electrical circuits.

Obviously, the arrangement and assembly of the said circuits requires a considerable operating time and a not insignificant use of qualified labour, with a detrimental effect on the cost of the finished product.

To obviate these disadvantages, systems capable of separating the supply energy to the various services and the control signals thereto have currently been provided, using techniques employing electronic components.

In this connection, reference can, for example, be made to Italian Patent application No. 22318 A/85 filed 1.10.85 by the same applicant.

Another like know system is that disclosed by the FR-A-2483646 document, on which is based the preamble of Claim 1.

With the aforesaid systems, on the other hand, the distribution of the electrical supply energy is effected by means of a single wire, so that problems for the correct dividing thereof arise.

The object of the present invention is that of providing a solution to the previously quoted problem by providing an electrical system for motor vehicles able to effect a balanced distribution of the power to the various utilisers of the motor vehicles.

Within the scope of the above stated object, a particular object of the present invention is that of providing an electrical system for motor vehicles which is structurally simple and of great reliability.

Another object of the present invention is that of providing an electrical system for motor vehicles which uses a single cable for the transport of the energy to be distributed.

The said object, as well as the other objects listed above and others which will possibly appear better in evidence hereinbelow, are achieved according to the invention by an electrical system for motor vehicles, having the features of the characterizing part of Claim 1.

Further characteristics and advantages of the electrical system for motor vehicles, which constitutes the subject of the present invention, will be better understood with the aid of the following description of a preferred embodiment of the electrical system itself, illustrated purely by way of indication in the attached drawings, in which :

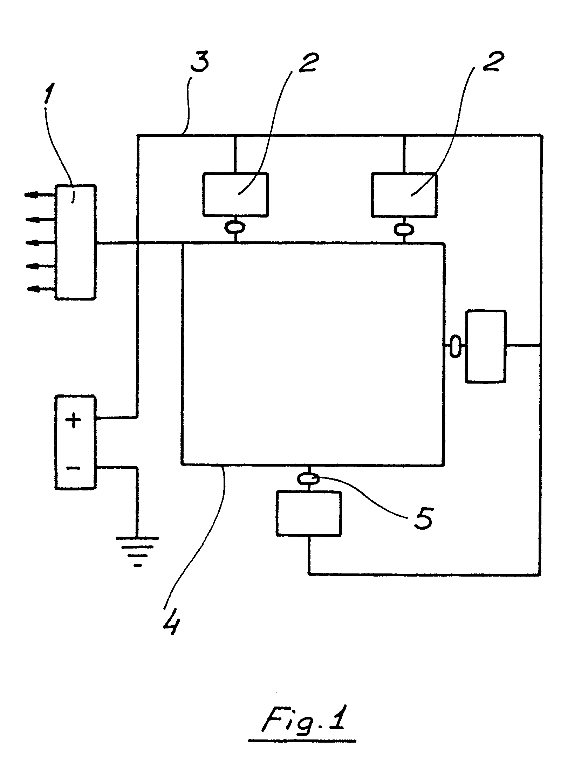

In Figure 1 this system is shown in schematic form in a case of supply correlated to the times in which the loads are required.

With particular reference to the numerical symbols of the said Figure, the electrical system for motor vehicles in question, comprises a central processing unit 1 preliminarily programmed according to a study comparing the times in which the various loads 2 are required and, therefore, to the contemporaneity, or to the exclusions which derive therefrom.

In this way it is possible to exploit correctly the same section of supply cable 3 to supply one or the other of the utilisers or loads themselves.

The most fitting example, by the way, is represented by the direction indicators : in fact, when one of the two is in operation the other is automatically excluded so that it is sufficient that the cable be dimensioned in such a way as to supply only one of them.

Obviously, there is provided a circuit 4 for the delivery of coded signals to the various utilisers which are controlled by a corresponding decoder unit 5.

According to the innovative idea of the present invention, there can be provided, in an alternative manner, the displacement of the takeoff point of the supply to the utiliser in such a way that the load on the cable 3 is conveniently balanced.

To this end, one can, for example, underline the fact that the heated rear window can be connected both on the right side and on the left side according to which section of supply cable is least loaded.

The said distribution, in particular, is obtained by means of a computer simulated mathematical model which permits an evaluation of which distribution of the loads is optimal.

Still within the scope of the inventive concept proposed by the present invention, a direct operation on the power distribution can also be provided in such a way as to create a priority for determined utilisers, excluding others : for example, upon starting of the engine the other utilisers of less importance are excluded, such as the seat adjustment, heated rear window, windscreen wiper and the like.

From what has been explained hereinabove, and from observation of the attached drawing, the great functionality and practicality in use which characterises the improved electrical system for motor vehicles constituting the subject of the present Patent of invention will be apparent.

Obviously, this electrical system for motor vehicles has been previously described and illustrated purely by way of indicative, non-limitative example, and solely for the purpose of demonstration of the practicability and general characteristics of the present invention so that all those variations and modifications within the scope of an expert in the art and capable of being drawn into the ambit of the innovative concept explained above can be introduced thereto.

## Claims

1. An electrical system for vehicles comprising a central processing unit (1), a coding circuitry (4) coupled to said central processing unit and controlled thereby, a plurality of utilisers (2) coupled to said coding circuitry through respective decoder units (5) and a common power supply cable (3) coupled to said plurality of utilisers and to a common power supply source, characterized in that said central processing unit (1) is programmed so as to drive said circuitry to cause selected said utilisers (2) to be powered on by said common power supply source so as to hold the electrical load on said power supply cable (3) balanced within set limits,

2. An electrical system according to claim 1, characterized in that said central processing unit (1) is so programmed as to displace the power takeoff point of said power supply source to said utilisers so as to hold said electrical load on said cable balanced.

3. An electrical system according to claim 1, characterized in that said central processing unit (1) is so programmed as to cause said utilisers to be power supplied on a priority base.

## Ansprüche

1. Elektrisches System für Kraftfahrzeuge, weisend eine zentrale Arbeitseinheit (1), ein mit derselben zentralen Arbeitseinheit gekoppelte und von derselben kontrollierte Kodifizierungsschaltschema (4), mehrere durch entsprechenden Dekodifizierungseinheiten (5) mit dem obigen Kodifizierungsschaltschema gekoppelte Benützer (2), und einen mit den obigen mehreren Benützern und mit auf einer gewöhnlichen Stromversorgungsquelle gekoppelte gewöhnliche Stromversorgungskabel (3) auf; dadurch gekennzeichnet, daß die obige zentrale Arbeitseinheit (1) zur Betätigung des obigen Schaltschema programmiert wird, um so den auf die obige gewöhnliche Stromversorgungsquelle gewählte Benützer (2) mit Strom zu versorgen, somit die elektrische Belastung auf den obige Stromversorgungskabel (3) innerhalb bestimmten Grenzen abgleichgehalten wird.

2. Elektrisches System nach Anspruch 1, dadurch gekennzeichnet, daß die obige zentrale Arbeitseinheit (1) zur Verschiebung des Stromausgangspunktes nach den obigen Benützern programmiert ist, somit die elektrische Belastung auf den obige Kabel abgegliechen wird.

3. Elektrisches System nach Anspruch 1, dadurch gekennzeichnet, daß die obengenannte zentrale Arbeitseinheit (1) zur vorrangsweisen Stromversorgung der obengenannten Benützern programmiert ist.

## Revendications

1. Système électrique pour véhicules, comprenant une unité de travail (1) centrale, un tableau électrique (4) de codification accouplé à ladite unité de travail centrale et contrôlé par elle, une pluralité d'utilisateurs (2) accouplés audit tableau électrique de codification à travers unités (5) de decodification respectives et un câble usuel d'alimentation (3) pour le courant, accouplé à ladite pluralité d'utilisateurs et à une source usuelle d'alimentation du courant, caractérisé en ce que ladite unité de travail (1) centrale, est programmée ainsi de commander ledit tableau électrique pour faire alimenter par courant lesdits utilisateurs (2) selectionnés sur ladite source usuelle d'alimentation du courant, ainsi de tenir la charge électrique sur ledit câble (3) d'alimentation du courant balancée dans de limites déterminés.

2. Système électriques selon la revendication 1, caractérisé en ce que ladite unité de travail (1) centrale est programmée de façon de déplacer le point de sortie du courant de ladite source d'alimentation du courant auxdits utilisateurs, ainsi de tenir ladite charge électrique balancée sur ledit câble.

3. Système électrique selon la revendication 1, caractérisé en ce que ladite unité de travail (1) est programmée de façon que lesdits utilisateurs soient alimenté par courant sur une base de priorité.

Fig.1